# EUROPÄISCHE PATENTSCHRIFT

(11) **EP 2 598 226 B1**
(45) Veröffentlichungstag und Bekanntmachung des Hinweises auf die Patenterteilung: **04.06.2014**
(21) Anmeldenummer: 11734079.4
(22) Anmeldetag: 19.07.2011
(51) Int. Cl.: B01D 45/08, B01D 50/00

(54) **REINIGUNGSVORRICHTUNG**
CLEANING APPARATUS
DISPOSITIF D'ÉPURATION

(30) Priorität: 28.07.2010 DE 102010032539
(43) Veröffentlichungstag der Anmeldung: 05.06.2013
(73) Patentinhaber: Mahle International GmbH, 70376 Stuttgart (DE)
(72) Erfinder: SAUTER, Hartmut, 71272 Renningen (DE); CAY, Can, 79540 Lörrach (DE)
(74) Vertreter: BRP Renaud & Partner
(86) Internationale Anmeldenummer: PCT/EP2011/062298
(87) Internationale Veröffentlichungsnummer: WO 2012/013534

(56) Entgegenhaltungen:
- EP-A1- 0 501 540
- DE-C- 69 023
- US-A1- 2008 236 116

## Beschreibung

Die vorliegende Erfindung betrifft eine Kurbelgehäuseentlüftungseinrichtung einer Brennkraftmaschine zum Rückführen von Blow-by-Gas von einem Kurbelgehäuse einer Brennkraftmaschine zu einer Frischluftanlage der Brennkraftmaschine, mit einer Reinigungsvorrichtung zum Entfernen von flüssigen oder festen Verunreinigungen aus einer Gasströmung.

In vielen Bereichen der Technik ist es erforderlich, aus einer Gasströmung Verunreinigungen zu entfernen. Beispielsweise kann bei der Holzverarbeitung Staub anfallen, der abgesaugt werden muss, um eine Staubemission zu reduzieren sowie um die Gefahr einer Staubexplosion zu reduzieren. Entsprechendes gilt zum Beispiel auch für eine Getreidemühle. Auch bei Brennkraftmaschinen, insbesondere in Kraftfahrzeugen, fallen Gasströmungen an, die von Verunreinigungen zu befreien sind. Beispielsweise muss der Brennkraftmaschine zugeführte Frischluft gereinigt werden. Ferner muss Blow-by-Gas, das von einem Kurbelgehäuse der Brennkraftmaschine zum Beispiel zur Frischluftanlage zurückgeführt wird, von Verunreinigungen gereinigt werden. Ebenso ist das von der Brennkraftmaschine abgeführte Abgas von Verunreinigungen zu befreien.

Für das Entfernen von flüssigen oder festen Verunreinigungen aus einer Gasströmung werden Reinigungsvorrichtungen verwendet, die beispielsweise mit einem Filtermaterial arbeiten, das vom zu reinigenden Gas durchströmt werden muss. Des Weiteren sind grundsätzlich Reinigungsvorrichtungen bekannt, die mit einer Trägheitsabscheidung arbeiten. Hierbei wird die Gasströmung umgelenkt. Dieser Strömungsumlenkung können die in der Gasströmung mitgeführten Verunreinigungen aufgrund ihrer größeren Dichte nicht oder nur erschwert folgen. Dies wird zum Abscheiden dieser Verunreinigungen genutzt. Trägheitsabscheider sind beispielsweise Zentrifugen, Zyklone und Impaktoren.

Aus der EP 1 068 890 A1 ist ein Abscheider für eine Kurbelgehäuseentlüftung bekannt. Der Abscheider kann dabei durch einen horizontal verlaufenden Trennboden in eine Anströmkammer und eine Abströmkammer getrennt sein. Der Gaseintritt erfolgt axial und ist zentral auf den quer zur Gasströmung angeordneten Trennboden gerichtet, so dass dort ein Aufprall und eine seitliche Ablenkung erfolgt. Der um 90° umgelenkte Gasstrom tritt durch eine Vielzahl von Düsenöffnungen, in welchen er beschleunigt wird, in eine zweite Kammer ein. Diese überlappt die erste Kammer im Bereich der Strömungsdüsen und weist eine Wandung auf, die den Strömungsdüsen gegenüberliegt und die parallel zur Wandung der ersten Kammer verläuft. Beide Wandungen verlaufen somit senkrecht zum Trennboden. Die Prallfläche in der zweiten Kammer besteht aus einem porösen Material, wie z.B. einem Faservlies, welches eine Sammelstruktur bildet. Nach einer erneuten Strömungsumlenkung um 90° strömt das gereinigte Gas aufwärts, passiert einen zusätzlichen Filter und verlässt die Reinigungsvorrichtung durch einen Auslass, der sich in einer senkrecht zur Strömung angeordneten Wand befindet, welche somit ebenfalls zumindest teilweise als Prallfläche dient.

Die vorliegende Erfindung beschäftigt sich mit einer Kurbelgehäuseentlüftungseinrichtung, deren Reinigungsvorrichtung mit wenigstens einem Impaktor ausgestattet ist. Vorzugsweise ist die Reinigungsvorrichtung als Vorabscheider ausgebildet. Ein derartiger Impaktor zeichnet sich dadurch aus, dass die Gasströmung gegen eine Prallwand geführt und an dieser umgelenkt wird. Während die Gasströmung der Umlenkung an der Prallwand folgt, treffen bzw. prallen die mitgeführten Verunreinigungen gegen die Prallwand, wodurch sie aus der Gasströmung ausgeschieden werden können.

Die vorliegende Erfindung beschäftigt sich mit dem Problem, für eine Kurbelgehäuseentlüftungseinrichtung der eingangs genannten Art eine verbesserte Ausführungsform anzugeben, die sich insbesondere durch einen einfachen Aufbau und eine hohe Reinigungswirkung auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, in einem Gehäuse der Reinigungsvorrichtung die Gasströmung zumindest zweimal, nämlich an wenigstens zwei in der Strömungsrichtung hintereinander angeordneten Prallplatten umzulenken, wobei zwischen den beiden Prallplatten außerdem zumindest eine Strömungsdüse angeordnet ist. Die beiden Prallplatten bilden dabei jeweils einen Impaktor, wobei der stromauf der wenigstens einen Strömungsdüse angeordnete Impaktor quasi eine Grobabscheidung für größere Verunreinigungen bewirkt, während der stromab der wenigstens einen Strömungsdüse angeordnete Impaktor quasi eine Feinabscheidung für kleinere Verunreinigungen bewirkt. Die wenigstens eine Strömungsdüse führt zu einer signifikanten Erhöhung der Strömungsgeschwindigkeit der Gasströmung. In der Folge trifft die Gasströmung mit dieser erhöhten Geschwindigkeit auf die stromab der wenigstens einen Strömungsdüse angeordnete Prallplatte. Durch die hohe Strömungsgeschwindigkeit können nun auch leichtere, also kleinere Verunreinigungen aus der Gasströmung abgeschieden werden.

Erreicht wird diese zumindest zweistufige Impaktorreinigung bei der hier vorgeschlagenen Reinigungsvorrichtung im Einzelnen dadurch, dass im Gehäuse der Reinigungsvorrichtung ein Trennboden angeordnet ist, der sich im Wesentlichen quer zur Gasströmung erstreckt, der für die ankommende Gasströmung als (erste) Prallplatte dient und der im Gehäuse einen ersten Raum von einem zweiten Raum trennt. Dieser Trennboden kann eben oder uneben ausgeführt sein. Bei besonderen Ausführungen ist der Trennboden zur Mitte hin erhaben oder vertieft ausgeführt. Hierbei stellen konische, kegelstumpfförmige oder prismenartige Ausführungen eine besonders vorteilhafte Ausgestaltung dar, da hierbei ein Bereich für die Anhäufung von abgeschiedenen Verunreinigungen geschaffen ist. Ferner ist eine den ersten Raum seitlich begrenzende erste Wand mit der wenigstens einen Strömungsdüse ausgestattet, über welche die Gasströmung vom ersten Raum in den zweiten Raum überströmen kann. Hierzu erstreckt sich der zweite Raum zumindest im Bereich der jeweiligen Strömungsdüse entlang der ersten Wand auch seitlich des ersten Raums. Der zweite Raum ist nun seinerseits seitlich durch eine zweite Wand begrenzt, die der ersten Wand und somit der jeweiligen Strömungsdüse mit einem Abstand gegenüberliegend angeordnet ist. Ferner dient diese zweite Wand als (zweite) Prallplatte, die von der aus der jeweiligen Strömungsdüse austretenden Gasströmung angeströmt ist. Der zweite Raum dient vorzugsweise als Schmutzspeicher, in welchem die abgeschiedenen Verunreinigungen gesammelt werden. Entsprechend dem aufzunehmenden Schmutzvolumen ist das Volumen des zweiten Raumes dimensionierbar. Der gesammelte Schmutz kann bei Bedarf aus dem Schmutzspeicher entfernt werden. Dies kann manuell in vorgegebenen Intervallen, z.B. bei Inspektionen, oder automatisch durch Betätigen von entsprechenden Ventilen erfolgen. Bei der erfindungsgemäßen Reinigungsvorrichtung ist außerdem vorgesehen, dass eine Einfassung den Auslass seitlich umschließt, in das Innere des jeweiligen Raums vorsteht und einen vom Auslassboden abstehenden Vorsprung bildet, der sich quer zur Gasströmung erstreckt und der am Auslassboden eine Sammelstruktur zum Sammeln von aus der Gasströmung abgeschiedenen Verunreinigungen bildet.

Bei einer einfachen Ausführungsform kann der erste Raum einen mit einem rohseitigen Einlass des Gehäuses verbundenen Einlasskanal bilden, während der zweite Raum einen mit einem Auslass des Gehäuses verbundenen Auslasskanal bildet. Die Reinigungsvorrichtung enthält oder bildet dann einen zweistufigen Impaktor.

Bei einer etwas aufwändigeren Ausführungsform kann im Gehäuse zumindest ein weiterer (zweiter) Trennboden angeordnet sein, der sich im Wesentlichen parallel zum anderen (ersten) Trennboden erstreckt. Dabei dient auch der zweite Trennboden für die ankommende Gasströmung als (dritte) Prallplatte und trennt im Gehäuse den zweiten Raum von einem dritten Raum. Bei dieser Ausführungsform kann nun auch die zweite Wand zumindest eine Strömungsdüse enthalten, durch welche die Gasströmung vom zweiten Raum in den dritten Raum überströmen kann. Auch hierbei erstreckt sich der dritte Raum zumindest im Bereich der jeweiligen Strömungsdüse entlang der zweiten Wand auch seitlich des zweiten Raums. Der dritte Raum ist seitlich von einer dritten Wand begrenzt, die der zweiten Wand und somit der jeweiligen Strömungsdüse mit einem Abstand gegenüberliegend angeordnet ist und die wieder als (vierte) Prallplatte dient, die von der aus der jeweiligen Düse austretenden Gasströmung angeströmt ist. Bei dieser Ausführungsform sind somit vier Prallplatten und dementsprechend vier Impaktoren bzw. Impaktorstufen realisiert. Dementsprechend enthält bzw. bildet die Reinigungsvorrichtung hier einen vierstufigen Impaktor. Die Reinigungswirkung kann dabei verbessert werden. Insbesondere können die einzelnen Impaktoren hinsichtlich unterschiedlich großer Verunreinigungen ausgelegt werden. Insgesamt kann dadurch eine hocheffiziente Reinigungswirkung realisiert werden, ohne dass der Durchströmungswiderstand der Reinigungsvorrichtung zu hoch wird.

Bei dieser Ausführungsform kann der erste Raum einen mit dem Einlass des Gehäuses verbundenen Einlasskanal bilden, während der dritte Raum einen mit dem Auslass des Gehäuses verbundenen Auslasskanal bildet. Der zweite Raum bildet dagegen einen Zwischenraum, der sich zwischen dem Einlasskanal und dem Auslasskanal befindet. Es klar, dass grundsätzlich auch mehr als ein Zwischenraum ausgebildet sein kann, so dass auch weitere Impaktorstufen vorgesehen sein können.

Auslassseitig kann das Gehäuse einen Auslassboden aufweisen, der beabstandet zur jeweiligen, als Prallplatte dienenden Wand den Auslass des Gehäuses enthält. Dieser Auslassboden bildet quasi das auslassseitige Ende des jeweiligen Auslasskanals.

Vorteilhaft kann nun zumindest eine solche Wand und/oder zumindest ein solcher Boden, also zumindest ein solcher Trennboden und/oder besagter Auslassboden, eine Sammelstruktur zum Sammeln der aus der Gasströmung abgeschiedenen Verunreinigungen aufweisen. Eine derartige Sammelstruktur verhindert, dass die am jeweiligen Impaktor abgeschiedenen Verunreinigungen durch die Gasströmung wieder mitgerissen und fortgetragen werden. Als Sammelstruktur eignet sich eine poröse Struktur, beispielsweise eine Faserstruktur, wie zum Beispiel ein Faservlies oder ein Fasergewebe, oder eine beliebige andere poröse Struktur, wie z.B. einen Schaum. Diese Sammelstruktur kann auf die Wand aufgebracht oder bei besonderen Ausführungen auch z. B. durch die Wand bzw. deren Werkstoff selbst gebildet sein. Die poröse Struktur kann bei vorteilhaften Ausgestaltungen benetzt, insbesondere beölt sein, um eine bessere Anhaftung der Partikel zu erreichen. Zusätzlich oder alternativ kann die Sammelstruktur zumindest einen Vorsprung aufweisen, der von der jeweiligen Prallwand, also vom jeweiligen Trennboden bzw. von der jeweiligen Wand absteht und sich quer zur Gasströmung erstreckt. Diese Vorsprünge bilden Barrieren, die eine Mitnahme der abgeschiedenen Verunreinigungen durch die Gasströmung erschweren. Insbesondere können diese Vorsprünge als Rinnen oder Kanäle konfiguriert sein, um die Verunreinigungen gezielt abzuführen.

Grundsätzlich kann auch eine Wand mit einer derartigen Sammelstruktur ausgestattet sein. Wobei die bei einer Wand vorgesehene Sammelstruktur außerdem dazu ausgestaltet sein kann, die abgeschiedenen Verunreinigungen zum nächstfolgenden Boden, also zu einem weiteren Trennboden oder zum Auslassboden weiterzuleiten.

Um die Reinigungswirkung der Reinigungsvorrichtung zu verbessern, kann gemäß einer weiteren Ausführungsform zumindest eine Filterstruktur und/oder eine Siebstruktur und/oder eine Aktivkohlestruktur und/oder eine Ceolitstruktur stromab der wenigstens einen Strömungsdüse im jeweiligen Raum angeordnet sein. Die jeweilige Struktur ist dabei im Strömungspfad so angeordnet, dass sie von der Gasströmung zwangsläufig durchströmt ist.

Die hier vorgestellte Reinigungsvorrichtung kann beispielsweise in einer Tankentlüftungseinrichtung eines Kraftfahrzeugs angeordnet sein. Ferner kann sie in einem Staubsauger oder in einem anderen motorisierten Kleingerät, wie zum Beispiel einer Motorsäge, einem Rasenmäher, einer Laubsaugeinrichtung oder einer Laubblaseinrichtung angeordnet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine stark vereinfachte, prinzipielle, teilweise geschnittene isometrische Ansicht einer Reinigungsvorrichtung,
- Fig. 2 und 3: jeweils eine stark vereinfachte Schnittansicht der Reinigungsvorrichtung, jedoch bei anderen Ausführungsformen.

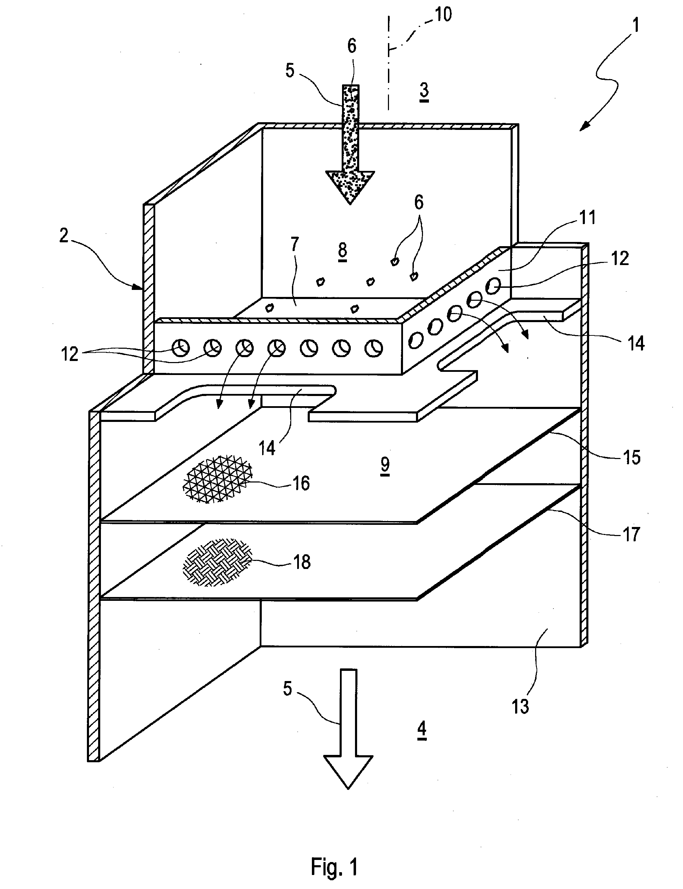

Entsprechend den Fig. 1-3 umfasst eine Reinigungsvorrichtung 1 ein Gehäuse 2, das zumindest einen rohseitigen Einlass 3 und zumindest einen reinseitigen Auslass 4 aufweist. Die Reinigungseinrichtung 1 dient zum Entfernen von flüssigen oder festen Verunreinigungen aus einer Gasströmung. Die Gasströmung ist in den Figuren durch Pfeile 5 angedeutet. Die Verunreinigungen sind in den Figuren durch Punkte 6 angedeutet. Erkennbar ist die rohseitige Gasströmung 5 mit Verunreinigungen 6 beladen, was durch Punkte im entsprechenden Strömungspfeil angedeutet ist, während die reinseitige Gasströmung 5 weitgehend von den Verunreinigungen 6 befreit ist, was durch einen Strömungspfeil ohne Punkte angedeutet ist.

Im Gehäuse 2 ist ein Trennboden 7 angeordnet, der im Gehäuse 2 einen ersten Raum 8 von einem zweiten Raum 9 trennt. Dieser Trennboden 7 wird im Folgenden auch als erster Trennboden 7 bezeichnet. Der erste Trennboden 7 erstreckt sich im Wesentlichen quer zur Gasströmung 5, also quer zu einer Längsachse 10 des Gehäuses 2, die durch die rohseitige Gasströmung 5 definiert ist und sich parallel zur Strömungsrichtung der Gasströmung 5 am Einlass 3 erstreckt. Da sich der erste Trennboden 7 quer zur Gasströmung 5 erstreckt, dient er für die ankommende Gasströmung 5 als Prallplatte, die im Folgenden auch als erste Prallplatte bezeichnet werden kann.

Der erste Raum 8 ist seitlich durch eine erste Wand 11 begrenzt, die zumindest eine Strömungsdüse 12 enthält. Vorzugsweise sind mehrere Strömungsdüsen 12 vorgesehen. Die Strömungsdüsen 12 sind in der ersten Wand 11 in einem an die erste Trennwand 7 angrenzenden Bereich angeordnet. Zweckmäßig befinden sich die Strömungsdüsen 12 äquidistant, also in gleichem Abstand, zum ersten Trennboden 7 in einer geradlinigen Reihe nebeneinander. Hierbei sind die Strömungsdüsen 12 als Durchgangsbohrungen mit einer zylindrischen Innenwand ausgeführt. Bei anderen Ausgestaltungen können die Strömungsdüsen 12 über einen konischen, sich verjüngenden Einlauf und/oder über einen konischen, sich erweiternden Auslauf verfügen. Zwischen Einlauf und Auslauf kann ein zylindrischer Bereich vorhanden sein. Im Beispiel definiert die erste Wand 11 einen Rechteckquerschnitt für den ersten Raum 8. Die Strömungsdüsen 12 sind im Beispiel in zwei von vier Seiten angeordnet. Es ist klar, dass hier auch andere Konfigurationen realisierbar sind. Beispielsweise können die Strömungsdüsen 12 auch nur an einer der vier Seiten oder an mehr als zwei Seiten angeordnet sein. Ferner kann die erste Wand 11 auch so konzipiert sein, dass sich für den ersten Raum 8 ein beliebiger mehreckiger oder runder Querschnitt ergibt.

Der zweite Raum 9 ist durch eine zweite Wand 13 seitlich begrenzt, wobei sich diese zweite Wand 13 axial soweit erstreckt, dass sie zumindest im Bereich der Strömungsdüsen 12 der ersten Wand 11 gegenüberliegt, und zwar mit einem Abstand. Dementsprechend befindet sich die zweite, glatt ausgeführte Wand 13 mit einem Abstand gegenüber den Strömungsdüsen 12. Sie kann dabei als weitere Prallplatte dienen, die im Folgenden als zweite Prallplatte bezeichnet wird. Die zweite Wand 13 bzw. die zweite Prallplatte wird von der aus den Strömungsdüsen 12 austretenden Gasströmung angeströmt. Die zweite Wand 13 kann im Bereich der Strömungsdüsen 12 über eine poröse Struktur verfügen oder glatt ausgeführt sein.

Da die Strömungsdüsen 12 insgesamt einen kleineren durchströmbaren Querschnitt aufweisen als der erste Raum 8 kommt es bei der Durchströmung der Strömungsdüsen 12 zu einer signifikanten Beschleunigung der Gasströmung. Somit trifft die Gasströmung 5 mit erhöhter Geschwindigkeit auf den als zweite Prallplatte dienenden Abschnitt der zweiten Wand 13. Gleichzeitig kommt es beim Übergang in den zweiten Raum 9 wieder zu einer Aufweitung des durchströmbaren Querschnitts, was die Strömungsgeschwindigkeit der Gasströmung 5 reduziert und die Abscheidung der gegen die zweite Prallplatte treffenden Verunreinigungen erleichtert. Die Strömungsdüsen 12 können konvergierende Strömungsquerschnitte aufweisen.

Bei der in Fig. 1 gezeigten Ausführungsform ist auch die zweite Wand 13 so strukturiert, dass sich für den zweiten Raum 9 ebenfalls ein rechteckiger Querschnitt ergibt. Es ist klar, dass auch hier grundsätzlich beliebige andere Querschnitte realisierbar sind, wie zum Beispiel Vieleckquerschnitte und runde Querschnitte.

Die erste Wand 11 erstreckt sich senkrecht zum ersten Trennboden 7. Die zweite Wand 13 verläuft parallel zur ersten Wand 11, also ebenfalls senkrecht zum ersten Trennboden 7. Im Bereich der Strömungsdüsen 12 überlappt die zweite Wand 13 die erste Wand 11 in der Längsrichtung 10 des Gehäuses 2, also axial.

Bei anderen Ausführungen kann der erste Trennboden 7 auch geneigt zu der ersten Wand 11 und/oder zur zweiten Wand 13 verlaufen. Die nachfolgend noch erläuterten Figuren können diese Merkmale bei anderen Ausgestaltungen ebenfalls aufweisen.

Im Beispiel der Fig. 1 ist der erste Trennboden 7 eben ausgeführt und so dimensioniert, dass er sich bis zur zweiten Wand 13 erstreckt, wodurch das Gehäuse 2 insgesamt eine höhere Steifigkeit und Stabilität besitzt. Damit sich der zweite Raum 9 durch den ersten Trennboden 7 bis zu einer vom ersten Raum 8 abgewandten Seite der ersten Wand 11 im Bereich der Strömungsdüsen 12 erstrecken kann, enthält der erste Trennboden 7 gemäß Fig. 1 zumindest eine Ausnehmung 14. Bei einer nicht dargestellten Ausführung kann der Trennboden 7 uneben ausgeführt sein und über eine Vertiefung verfügen, welche z. B. konisch, kegelstumpfförmig oder pyramidenförmig ausgeführt sein kann. In dieser Vertiefung können sich abgeschiedene Verunreinigungen ablagern, wobei ein Mitreißen der Verunreinigungen durch die Gasströmung verhindert wird. Diese Merkmale können auch bei den nachfolgend beschriebenen Ausführungsbeispielen verwirklicht sein.

Bei der in Fig. 1 gezeigten Ausführungsform ist im zweiten Raum 9 außerdem eine Siebstruktur 15 angeordnet, die durch ein Drahtgeflecht oder Gitter gebildet sein kann. Ein Bereich 16 deutet dabei das jeweilige Drahtgeflecht oder Drahtgewebe oder die jeweilige Gitterstruktur der Siebstruktur 15 an. Die Siebstruktur 15 ist dementsprechend stromab der Strömungsdüsen 12 im Gehäuse 2 positioniert. Die Siebstruktur 15 ist dabei im zweiten Raum 9 so angeordnet, dass sie sich über den gesamten durchströmbaren Querschnitt des zweiten Raums 9 erstreckt und dementsprechend zwingend von der Gasströmung 5 durchströmt ist.

Zusätzlich oder alternativ zur Siebstruktur 15 kann im zweiten Raum 9 eine Filterstruktur 17 bzw. ein Adsorber angeordnet sein. Insbesondere kann der Adsorber z.B. Kohlenwasserstoffe, Luftfeuchtigkeit o.ä. aufnehmen. Dieser Adsorber kann Aktivkohle Ceolite oder MOF (metall organic frame) enthalten. Die Filterstruktur 17 kann aus einem herkömmlichen Filtermaterial bestehen, wie zum Beispiel ein Faservlies oder ein Filterpapier oder dergleichen. Innerhalb der Filterstruktur 17 ist ein Bereich 18 angedeutet, der die Faserstruktur oder Gewebestruktur der jeweiligen Filterstruktur 17 symbolisiert.

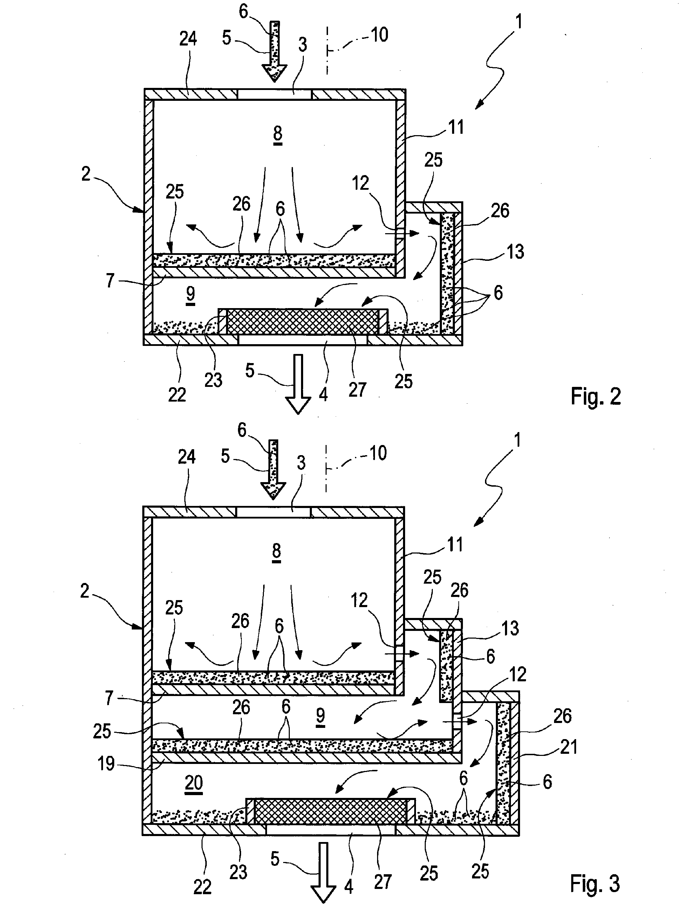

Bei der in Fig. 2 gezeigten Ausführungsform bildet der erste Raum 8 einen Einlasskanal, der mit dem Einlass 3 verbunden ist. Gleichzeitig bildet der zweite Raum 9 einen Auslasskanal, der mit dem Auslass 4 verbunden ist. Bei der in Fig. 2 gezeigten Ausführungsform arbeitet die Reinigungsvorrichtung 1 mit einem zweistufigen Impaktor bzw. mit zwei Impaktorstufen oder mit zwei in der Strömungsrichtung nacheinander angeordneten Impaktoren. Die erste Impaktorstufe bzw. der erste Impaktor wird dabei durch die erste Trennwand 7 in Verbindung mit der daran erfolgenden Strömungsumlenkung, die hier 90° beträgt, gebildet. Die zweite Impaktorstufe bzw. der zweite Impaktor wird hier durch die zweite Wand 13 in Verbindung mit der daran erfolgten Strömungsumlenkung gebildet, die hier ebenfalls etwa 90° beträgt. Der zweite Impaktor besitzt hierbei eine besonders hohe Effizienz, da er mit vergleichsweise geringem Abstand stromab der Strömungsdüsen 12 angeordnet ist.

Fig. 3 zeigt nun eine Ausführungsform, bei welcher die Reinigungsvorrichtung 1 mit einem vierstufigen Impaktor arbeitet, der vier Impaktorstufen besitzt oder aus vier in der Strömungsrichtung hintereinander angeordneten Impaktoren gebildet ist. Hierzu ist im Gehäuse 2 ein weiterer Trennboden 19 angeordnet, der im Folgenden auch als zweiter Trennboden 19 bezeichnet wird. Dieser zweite Trennboden 19 erstreckt sich im Wesentlichen parallel zum ersten Trennboden 7 und dient für die ankommende Gasströmung ebenfalls als Prallplatte, die im Folgenden auch als dritte Prallplatte bezeichnet werden kann. Hierdurch wird in Verbindung mit der am zweiten Trennboden 19 stattfindenden Strömungsumlenkung, die hier etwa 90° beträgt, eine dritte Impaktorstufe bzw. ein dritter Impaktor gebildet.

Der zweite Trennboden 19 trennt im Gehäuse 2 den zweiten Raum 9 von einem dritten Raum 20. Dieser dritte Raum 20 kommuniziert über wenigstens eine weitere Strömungsdüse 12 mit dem zweiten Raum 9, die hierzu in der zweiten Wand 13 ausgebildet ist. Vorzugsweise sind auch hier mehrere Strömungsdüsen 12 in der zweiten Wand 13 angeordnet. Grundsätzlich kann die Positionierung und Anordnung der Strömungsdüsen 12 in der zweiten Wand 13 analog zu der Positionierung und Anordnung der Strömungsdüsen 12 in der ersten Wand 11 erfolgen. Die Gasströmung 5, die sich beim Übertritt in den zweiten Raum 9 entspannt und somit verlangsamt hat, wird beim Übergang zum dritten Raum 20 in den Strömungsdüsen 12 erneut beschleunigt. Die Strömungsdüsen 12 der zweiten Wand 13 können konvergierende Strömungsquerschnitte aufweisen. Sie können so konfiguriert sein, dass sie die Gasströmung stärker beschleunigen als die Strömungsdüsen 12 der ersten Wand 11.

Der dritte Raum 20 ist mit einer dritten Wand 21 seitlich begrenzt, die sich zweckmäßig parallel zur zweiten Wand 13 und im Beispiel außerdem parallel zur ersten Wand 11 erstreckt. Ferner verläuft die dritte Wand 21 zumindest im Bereich der Düsen 12 in der Längsrichtung 10 überlappt gegenüber der zweiten Wand 13 sowie zur zweiten Wand 13 beabstandet. Dementsprechend erstreckt sich die dritte Wand 21 auch mit einem Abstand gegenüber den Strömungsdüsen 12 und kann als weitere Prallplatte die aus den Düsen 12 austretende Gasströmung dienen, die im Folgenden als vierte Prallplatte bezeichnet wird. Diese vierte Prallplatte bildet in Verbindung mit der daran erfolgenden Strömungsumlenkung, die etwa 90° beträgt, die vierte Impaktorstufe bzw. den vierten Impaktor. Diese vierte Impaktorstufe bzw. der vierte Impaktor besitzt wieder eine erhöhte Effizienz, da einerseits die Gasströmung durch die Strömungsdüsen 12 beschleunigt ist und mit hoher Geschwindigkeit gegen den als vierte Prallplatte dienenden Abschnitt der dritten Wand 21 trifft. Andererseits kommt es im dritten Raum 20 wieder zu einer Entspannung, was die Gasströmung verlangsamt, jedoch nicht die darin mitgeführten Verunreinigungen.

Bei der in Fig. 3 gezeigten Ausführungsform bildet der erste Raum 8 wieder einen mit dem Einlass 3 verbundenen Einlasskanal, während nun der dritte Raum 20 einen mit dem Auslass 4 verbundenen Auslasskanal bildet. Der zweite Raum 9 bildet hier einen Zwischenraum, der zwischen dem Einlasskanal (erster Raum 8) und dem Auslasskanal (dritter Raum 20) angeordnet ist. Bei einer anderen Ausführungsform der Reinigungsvorrichtung 1, die weitere Impaktoren bzw. Impaktorstufen aufweisen kann, können auch zwei oder mehr derartige Zwischenräume (zweiter Raum 9) vorgesehen sein.

Bei den in den Fig. 2 und 3 gezeigten Ausführungsformen besitzt das Gehäuse 2 einen Auslassboden 22, der den Auslass 4 enthält. Je nach Konfiguration der Reinigungsvorrichtung 1 begrenzt der Auslassboden 22 den zweiten Raum 9 (Fig. 2) bzw. den dritten Raum 20 (Fig. 3). Optional kann das Gehäuse 2 außerdem mit einem Einlassboden 24 ausgestattet sein, der den Einlass 3 enthält. Der Einlassboden 24 begrenzt den ersten Raum 8.

Der jeweilige Auslass 4 ist im Auslassboden 22 so angeordnet, dass er zur jeweiligen Wand 13 (Fig. 2) bzw. 21 (Fig. 3) seitlich beabstandet ist. Hierdurch ist es insbesondere möglich, eine den Auslass 4 seitlich umschließende, in das Innere des jeweiligen Raums 9 (Fig. 2) bzw. 20 (Fig. 3) vorstehende Einfassung 23 am Auslassboden 22 auszubilden. Diese Einfassung 23 bildet dabei einen vom Auslassboden 22 abstehenden Vorsprung, der sich quer zur Gasströmung 5 erstreckt und dementsprechend von dieser überwunden werden muss, damit die Gasströmung 5 zum Auslass 4 gelangen und aus dem Gehäuse 2 ausströmen kann.

Die zuvor beschriebene Einfassung 23, die am Auslassboden 22 angeordnet ist, bildet an diesem Auslassboden 22 eine Sammelstruktur 25, die es ermöglicht, die aus der Gasströmung 5 abgeschiedenen Verunreinigungen 6 zu sammeln. Die Gasströmung 5 muss nämlich die Einfassung 23 zusätzlich umströmen, um aus dem Gehäuse 2 austreten zu können. Dieser Umströmung können die abgeschiedenen Verunreinigungen 6, die sich gegebenenfalls am Auslassboden 22 ansammeln, nicht oder nur sehr schwer folgen.

Bei den Ausführungsformen der Fig. 2 und 3 sind außerdem die Trennböden 7 und 19 mit einer Sammelstruktur 25 ausgestattet. Ebenso sind die zweite Wand 13 und die dritte Wand 21 jeweils zumindest im Bereich der Prallwand, also gegenüber den Strömungsdüsen 12 mit einer derartigen Sammelstruktur 25 versehen. Während die am jeweiligen Boden 7, 19, 22 angeordnete Sammelstruktur 25 in erster Linie zum Sammeln der aus der Gasströmung 5 abgeschiedenen Verunreinigungen 6 ausgestaltet ist, können die an den Wänden 13, 21 angeordneten Sammelstrukturen 25 zusätzlich auch dazu ausgestaltet sein, die gesammelten Verunreinigungen 6 zum nächstfolgenden Boden 19 bzw. 22 weiterzuleiten.

Diese Sammelstrukturen 25 können - wie bereits mit Bezug auf die Einfassung 23 erläutert - zum Beispiel zumindest einen Vorsprung (z.B. die Einfassung 23) aufweisen, der vom jeweiligen Boden 7, 19, 22 oder von der jeweiligen Wand 13, 21 in das Innere des jeweiligen Raums 9, 20 vorsteht und sich dabei im Wesentlichen quer zur Gasströmung 5 erstreckt. Ferner kann die jeweilige Sammelstruktur 25 wie hier an den Trennböden 7, 19 und an den Wänden 13, 21 durch eine Faserstruktur 26 gebildet sein, wie zum Beispiel ein Faservlies oder ein Fasergewebe. Ebenso kann die Sammelstruktur 25 durch eine Schwammstruktur oder Schaumstruktur gebildet sein.

Die hier vorgestellte Reinigungsvorrichtung 1 eignet sich in besonderer Weise für eine Verwendung in einer Tankentlüftungseinrichtung eines Kraftfahrzeugs oder für eine Verwendung in einer Kurbelgehäuseentlüftungseinrichtung einer Brennkraftmaschine oder für eine Verwendung in einem Staubsauger oder für eine Verwendung in einem motorisierten Kleingerät, wie zum Beispiel eine Motorsäge oder ein Rasenmäher oder eine Laubsaugeinrichtung oder eine Laubblaseinrichtung oder dergleichen.

Wie in den Fig. 2 und 3 exemplarisch angedeutet, kann in der Einfassung 23 optional ein Filterelement 27 angeordnet sein, welches die restlichen, noch im Gasstrom verbleibenden Verunreinigungen zurückhält bzw. verhindert, dass abgeschiedene Verunreinigungen mitgeführt werden und durch den Auslass 4 austreten können. Dieses Filterelement 27 kann z.B. als Plattenfilter oder Rundfilter mit einem vorzugsweise plissierten Filtermedium ausgestaltet sein.

Bei der Verwendung der Reinigungsvorrichtung 1 gemäß einem der Ausführungsbeispiele, als Tankentlüftung, kann die Sammelstruktur 25 bzw. Faserstruktur 26 Aktivkohle enthalten, um die flüchtigen Kohlenwasserstoffe aufzunehmen.

## Patentansprüche

1. Kurbelgehäuseentlüftungseinrichtung einer Brennkraftmaschine zum Rückführen von Blow-by-Gas von einem Kurbelgehäuse einer Brennkraftmaschine zu einer Frischluftanlage der Brennkraftmaschine, mit einer Reinigungsvorrichtung (1) zum Entfernen von flüssigen oder festen Verunreinigungen (6) aus einer Gasströmung (5) aus Blow-by-Gas, umfassend
- ein Gehäuse (2), das mindestens einen rohseitigen Einlass (3) und mindestens einen reinseitigen Auslass (4) aufweist,
- einen im Gehäuse (2) angeordneten Trennboden (7), der sich im Wesentlichen quer zur Gasströmung (5) erstreckt, für die ankommende Gasströmung (5) als Prallplatte dient und im Gehäuse (2) einen ersten Raum (8) von einem zweiten Raum (9) trennt,
- wobei eine den ersten Raum (8) seitlich begrenzende erste Wand (11) mehrere Strömungsdüsen (12) enthält, durch welche die Gasströmung (5) vom ersten Raum (8) in den zweiten Raum (9) überströmen kann und dabei beschleunigt wird,
- wobei eine den zweiten Raum (9) seitlich begrenzende zweite Wand (13) der jeweiligen Strömungsdüse (12) mit einem Abstand gegenüberliegend angeordnet ist und als von der aus der jeweiligen Strömungsdüse (12) austretenden Gasströmung (5) angeströmte Prallplatte dient,
- wobei ein Auslassboden (22) vorgesehen ist, der beabstandet zur jeweiligen, als Prallplatte dienenden Wand (13, 21) den Auslass (4) enthält,
**dadurch gekennzeichnet,**
**dass** eine Einfassung (23) vorgesehen ist, die den Auslass (4) seitlich umschließt, die in das Innere des jeweiligen Raums (9, 20) vorsteht und die einen vom Auslassboden (22) abstehenden Vorsprung bildet, der sich quer zur Gasströmung (5) erstreckt und der am Auslassboden (22) eine Sammelstruktur (25) zum Sammeln von aus der Gasströmung (5) abgeschiedenen Verunreinigungen (6) bildet.

2. Kurbelgehäuseentlüftungseinrichtung nach Anspruch 1,
**dadurch gekennzeichnet,**
- **dass** sich der zweite Raum (9) zumindest im Bereich der jeweiligen Strömungsdüse (12) entlang der ersten Wand (11) auch seitlich des ersten Raums (8) erstreckt, und/oder
- **dass** die zweite Wand (13) im Bereich der jeweiligen Strömungsdüse (12) die erste Wand (11) parallel zu einer Längsachse (10) des Gehäuses (2) überlappt.

3. Kurbelgehäuseentlüftungseinrichtung nach Anspruch 1 oder 2,
**dadurch gekennzeichnet,**
- **dass** sich die erste Wand (11) senkrecht zum Trennboden (7) erstreckt, und/oder
- **dass** sich die zweite Wand (13) parallel zur ersten Wand (11) und/oder senkrecht zum Trennboden (7) erstreckt.

4. Kurbelgehäuseentlüftungseinrichtung nach einem der Ansprüche 1 bis 3, **dadurch gekennzeichnet,**
- **dass** am Trennboden (7) eine Strömungsumlenkung von etwas 90° erfolgt, und/oder
- **dass** an der zweiten Wand (13) eine Strömungsumlenkung von etwa 90° erfolgt.

5. Kurbelgehäuseentlüftungseinrichtung nach einem der Ansprüche 1 bis 4,
**dadurch gekennzeichnet,**
**dass** der erste Raum (8) einen mit dem Einlass (3) verbundenen Einlasskanal bildet, während der zweite Raum (9) einen mit dem Auslass (4) verbundenen Auslasskanal bildet.

6. Kurbelgehäuseentlüftungseinrichtung nach einem der Ansprüche 1 bis 4, **dadurch gekennzeichnet,**
- **dass** im Gehäuse (2) ein weiterer (zweiter) Trennboden (19) angeordnet ist, der sich im Wesentlichen parallel zum anderen (ersten) Trennboden (7) erstreckt, für die ankommende Gasströmung (5) als Prallplatte dient und im Gehäuse (2) den zweiten Raum (9) von einem dritten Raum (20) trennt,
- **dass** die zweite Wand (13) zumindest eine Strömungsdüse (12) enthält, durch welche die Gasströmung (5) vom zweiten Raum (9) in den dritten Raum (20) überströmen kann,
- **dass** eine den dritten Raum (20) seitlich begrenzende dritte Wand (21) der jeweiligen Strömungsdüse (12) mit einem Abstand gegenüberliegend angeordnet ist und als von der aus der jeweiligen Düse (12) austretenden Gasströmung (5) angeströmte Prallplatte dient.

7. Kurbelgehäuseentlüftungseinrichtung nach Anspruch 6,
**dadurch gekennzeichnet,**
- **dass** sich der dritte Raum (20) zumindest im Bereich der jeweiligen Strömungsdüse (12) entlang der zweiten Wand (13) auch seitlich des dritten Raums (20) erstreckt, und/oder
- **dass** die dritte Wand (21) im Bereich der jeweiligen Strömungsdüse (12) die zweite Wand (13) parallel zu einer Längsachse (10) des Gehäuses (2) überlappt.

8. Kurbelgehäuseentlüftungseinrichtung nach Anspruch 6 oder 7,
**dadurch gekennzeichnet,**
- **dass** sich die dritte Wand (21) senkrecht zum zweiten Trennboden (19) erstreckt, und/oder
- **dass** sich die dritte Wand (21) parallel zur ersten Wand (11) und/oder parallel zur zweiten Wand (13) und/oder senkrecht zu den Trennböden (7, 19) erstreckt.

9. Kurbelgehäuseentlüftungseinrichtung nach einem der Ansprüche 6 bis 8,
**dadurch gekennzeichnet,**
- **dass** am zweiten Trennboden (19) eine Strömungsumlenkung von etwa 90° erfolgt, und/oder
- **dass** an der dritten Wand (21) eine Strömungsumlenkung von etwa 90° erfolgt.

10. Kurbelgehäuseentlüftungseinrichtung nach einem der Ansprüche 6 bis 9, **dadurch gekennzeichnet,**
- **dass** der erste Raum (8) einen mit dem Einlass (3) verbundenen Einlasskanal bildet, während der dritte Raum (20) einen mit dem Auslass (4) verbundenen Auslasskanal bildet,
- **dass** der zweite Raum (9) einen zwischen Einlasskanal und Auslasskanal angeordneten Zwischenraum bildet,
- wobei insbesondere vorgesehen sein kann, dass zwei oder mehr derartige Zwischenräume vorgesehen sein können.

11. Kurbelgehäuseentlüftungseinrichtung nach einem der Ansprüche 1 bis 10,
**dadurch gekennzeichnet,**
**dass** in der Einfassung (23) ein Filterelement (27) angeordnet ist.

12. Kurbelgehäuseentlüftungseinrichtung nach einem der Ansprüche 1 bis 11,
**dadurch gekennzeichnet,**
**dass** zumindest ein weiterer Boden (7, 19) und/oder zumindest eine solche Wand (13, 21) eine weitere Sammelstruktur (25) zum Sammeln der aus der Gasströmung (5) abgeschiedenen Verunreinigungen (6) aufweist.

13. Kurbelgehäuseentlüftungseinrichtung nach einem der Ansprüche 1 bis 12,
**dadurch gekennzeichnet,**
**dass** zumindest eine solche Wand (13, 21) eine Sammelstruktur (25) zum Sammeln und Weiterleiten zum nächstfolgenden Boden (19, 22) der aus der Gasströmung (5) abgeschiedenen Verunreinigungen (6) aufweist.

14. Kurbelgehäuseentlüftungseinrichtung nach Anspruch 12 oder 13,
**dadurch gekennzeichnet,**
- **dass** die jeweilige Sammelstruktur (25) eine Faserstruktur (26), wie zum Beispiel ein Faservlies oder ein Fasergewebe, oder eine Schwammstruktur oder eine Schaumstruktur aufweist oder ist, und/oder
- **dass** die jeweilige Sammelstruktur (25) wenigstens einen vom jeweiligen Boden (7, 19) oder von der jeweiligen Wand (13, 21) abstehenden Vorsprung (23) aufweist, der sich quer zur Gasströmung (5) erstreckt.

15. Kurbelgehäuseentlüftungseinrichtung nach einem der Ansprüche 1 bis 14,
**dadurch gekennzeichnet,**
**dass** wenigstens eine Filterstruktur (17) und/oder eine Siebstruktur (15) und/oder eine Aktivkohlestruktur stromab der wenigstens einen Strömungsdüse (12) im jeweiligen Raum (9, 20) angeordnet ist.

## Claims

1. A crankcase venting device of an internal combustion engine for recirculating blow-by gas from a crankcase of an internal combustion engine to a fresh air system of the internal combustion engine, including a cleaning device (1) for removing liquid or solid impurities (6) from a gas flow (5) consisting of blow-by gas, comprising
- a housing (2) that has at least one inlet (3) on the dirty side and at least one outlet (4) on the clean side,
- a separating bottom (7) that is arranged in the housing (2) and extends substantially transverse to the gas flow (5), serves as a baffle plate for the arriving gas flow (5) and separates a first chamber (8) from a second chamber (9) in the housing (2),
- wherein a first wall (11) that laterally borders the first chamber (8) contains a plurality of flow nozzles (12) through which the gas flow (5) can flow from the first chamber (8) into the second chamber (9) and is accelerated at the same time,
- wherein a second wall (13) that laterally borders the second chamber (9) is arranged at a distance opposite from the respective flow nozzle (12) and serves as a baffle plate towards which the gas flow (5) leaving the respective flow nozzle (12) flows,
- wherein an outlet bottom (22) is provided that is spaced apart from the respective wall (13, 21) serving as a baffle plate and that contains the outlet (4),
**characterized in**
**that** an enclosure (23) is provided that laterally encloses the outlet (4) and protrudes into the inside of the respective chamber (9, 20) and that forms a projection that projects from the outlet bottom (22) and extends transverse to the gas flow (5) and forms a collecting structure (25) for collecting impurities (6) that are separated from the gas flow (5).

2. The crankcase venting device according to claim 1,
**characterized in**
- **that** the second chamber (9), at least in the region of the respective flow nozzle (12) along the first wall (11), also extends laterally of the first chamber (8), and/or
- **that** in the range of the respective flow nozzle (12), the second wall (13) overlaps the first wall (11) parallel to the a longitudinal axis (10) of the housing (2).

3. The crankcase venting device according to claim 1 or claim 2,
**characterized in**
- **that** the first wall (11) extends perpendicular to the separating bottom (7), and/or
- **that** the second wall (13) extends parallel to the first wall (11) and/or perpendicular to the separating bottom (7).

4. The crankcase venting device according to any one of the claims 1 to 3,
**characterized in**
- a flow deflection of approximately 90° takes place at the separating bottom (7), and/or
- a flow deflection of approximately 90° takes place at the second wall (13).

5. The crankcase venting device according to any one of the claims 1 to 4, **characterized in that** the first chamber (8) forms an inlet channel that is connected to the inlet (3), while the second chamber (9) forms an outlet channel that is connected to the outlet (4).

6. The crankcase venting device according to any one of the claims 1 to 4,
**characterized in**
- **that** in the housing (2) a further (second) separating bottom (19) is arranged that extends substantially parallel to the other (first) separating bottom (7), serves as a baffle plate for the arriving gas flow (5), and separates in the housing (2) the second chamber (9) from a third chamber (20),
- **that** the second wall (13) contains at least one flow nozzle (12) through which the gas flow (5) can flow from the second chamber (9) into the third chamber (20),
- **that** a third wall (21) that laterally borders the third chamber (20) is arranged at a distance opposite from the respective flow nozzle (12) and serves as a baffle plate towards which the gas flow (5) leaving the respective flow nozzle (12) flows.

7. The crankcase venting device according to claim 6,
**characterized in**
- **that** the third chamber (20), at least in the region of the respective flow nozzle (12) along the second wall (13), also extends laterally of the third chamber (20), and/or
- **that** in the range of the respective flow nozzle (12), the third wall (21) overlaps the second wall (13) parallel to a longitudinal axis (10) of the housing (2).

8. The crankcase venting device according to claim 6 or claim 7,
**characterized in**
- **that** the third wall (21) extends perpendicular to the second separating bottom (19), and/or
- **that** the third wall (21) extends parallel to the first wall (11) and/or parallel to the second wall (13) and/or perpendicular to the separating bottoms (7, 19).

9. The crankcase venting device according to any one of the claims 6 to 8,
**characterized in**
- **that** a flow deflection of approximately 90° takes place at the second separating bottom (19), and/or
- **that** a flow deflection of approximately 90° takes place at the third wall (21).

10. The crankcase venting device according to any one of the claims 6 to 9,
**characterized in**
- **that** the first chamber (8) forms an inlet channel that is connected to the inlet (3), while the third chamber (20) forms an outlet channel that is connected to the outlet (4),
- **that** the second chamber (9) forms an intermediate space between the inlet channel and the outlet channel,
- wherein it can in particular be provided that two or more such intermediate spaces can be provided.

11. The crankcase venting device according to any one of the claims 1 to 10, **characterized in that** a filter element (27) is arranged in the enclosure (23).

12. The crankcase venting device according to any one of the claims 1 to 11, **characterized in that** at least one further bottom (7, 19) and/or at least one such wall (13, 21) has a further collecting structure (25) for collecting the impurities (6) that are separated from the gas flow (5).

13. The crankcase venting device according to any one of the claims 1 to 12, **characterized in that** at least one such wall (13, 21) has a collecting structure (25) for collecting the impurities (6) that are separated from the gas flow (5) and for transferring them to the next following bottom (19, 22).

14. The crankcase venting device according to claim 12 or claim 13,
**characterized in**
- **that** the respective collecting structure (25) has or is a fiber structure (26), for example a nonwoven fabric or a woven fabric, or a sponge structure or a foam structure, and/or
- **that** the respective collecting structure (25) has at least one projection (23) that projects from the respective bottom (7, 19) or from the respective wall (13, 21) and extends transverse to the gas flow (5).

15. The crankcase venting device according to any one of the claims 1 to 14, **characterized in that** at least one filter structure (17) and/or a screen structure (15) and/or an activated carbon structure is arranged downstream of the at least one flow nozzle (12) in the respective chamber (9, 20).

## Revendications

1. Dispositif de ventilation de carter d'un moteur à combustion interne pour réintroduire du gaz blow-by depuis un carter d'un moteur à combustion interne vers une installation de gaz frais du moteur à combustion interne, comportant un dispositif de purification (1) pour éliminer les impuretés (6) liquides ou solides d'un écoulement de gaz (5) constitué de gaz blow-by, comprenant :
- un logement (2), qui présente au moins une admission (3) du côté brut et au moins un échappement (4) du côté purifié,
- un fond de séparation (7) disposé dans le logement (2), qui s'étend essentiellement transversalement à l'écoulement de gaz (5), sert de plaque d'impact pour l'écoulement de gaz entrant (5) et sépare dans le logement (2) un premier espace (8) d'un deuxième espace (9),
- dans lequel une première paroi (11) délimitant latéralement le premier espace (8) contient plusieurs buses d'écoulement (12), à travers lesquelles l'écoulement de gaz (5) peut déborder du premier espace (8) dans le deuxième espace (9) et est ainsi accéléré,
- dans lequel une deuxième paroi (13) délimitant latéralement le deuxième espace (9) est disposée avec un espacement en vis-à-vis de la buse d'écoulement (12) respective et sert de plaque d'impact parcourue par l'écoulement de gaz (5) sortant de la buse d'écoulement (12) respective,
- dans lequel un fond d'échappement (22) est prévu, qui contient l'échappement (4) en espacement par rapport à la paroi respective (13, 21) servant de plaque d'impact,
**caractérisé en ce que** une bordure (23) est prévue, qui entoure latéralement l'échappement (4), qui dépasse à l'intérieur de l'espace respectif (9, 20) et qui forme une protubérance en saillie depuis le fond d'échappement (22), qui s'étend transversalement à l'écoulement de gaz (5) et qui forme sur le fond d'échappement (22) une structure collectrice (25) pour collecter les impuretés (6) séparées de l'écoulement de gaz (5).

2. Dispositif de ventilation du carter selon la revendication 1, **caractérisé en ce que**
- le deuxième espace (9) s'étend au moins au niveau de la buse d'écoulement respective (12) le long de la première paroi (11) latéralement au premier espace (8), et/ou
- la deuxième paroi (13) se superpose au niveau de la buse d'écoulement respective (12) à la première paroi (11) latéralement à un axe longitudinal (10) du logement (2).

3. Dispositif de ventilation du carter selon les revendications 1 ou 2, **caractérisé en ce que**
- la première paroi (11) s'étend perpendiculairement au fond de séparation (7), et/ou
- la deuxième paroi (13) s'étend parallèlement à la première paroi (11) et/ou perpendiculairement au fond de séparation (7).

4. Dispositif de ventilation du carter selon une des revendications 1 à 3, **caractérisé en ce que**
- sur le fond de séparation (7) une déviation d'écoulement d'environ 90° a lieu, et/ou
- sur la deuxième paroi (13) une déviation d'écoulement d'environ 90° a lieu.

5. Dispositif de ventilation du carter selon une des revendications 1 à 4, **caractérisé en ce que** le premier espace (8) forme un canal d'admission relié à l'échappement (3), alors que le deuxième espace (9) forme un canal d'échappement relié à l'échappement (4).

6. Dispositif de ventilation du carter selon une des revendications 1 à 4, **caractérisé en ce que**
- dans le logement (2) un (deuxième) fond de séparation (18) supplémentaire est disposé, qui s'étend essentiellement parallèlement à l'autre (premier) fond de séparation (7), sert de plaque d'impact pour l'écoulement de gaz (5) entrant et sépare dans le logement (2) le deuxième espace (9) d'un troisième espace (20),
- la deuxième paroi (13) contient au moins une buse d'écoulement (12), à travers laquelle l'écoulement de gaz (5) peut déborder du deuxième espace (9) dans le troisième espace (20),
- une troisième paroi (21) délimitant latéralement le troisième espace (20) est disposé en vis-à-vis avec un espacement par rapport à la buse d'écoulement (12) respective et sert de plaque d'impact parcourue par un écoulement de gaz (5) sortant de la buse respective (12).

7. Dispositif de ventilation du carter selon la revendication 6, **caractérisé en ce que**
- le troisième espace (20) s'étend au moins au niveau de la buse d'écoulement respective (12) le long de la deuxième paroi (13) également latéralement au troisième espace (20), et/ou
- la troisième paroi (21) se superpose au niveau de la buse d'écoulement respective (12) à la deuxième paroi (13) parallèlement à un axe longitudinal (10) du logement (2).

8. Dispositif de ventilation du carter selon les revendications 6 ou 7, **caractérisé en ce que**
- la troisième paroi (21) s'étend perpendiculairement au deuxième fond de séparation (19), et/ou
- la troisième paroi (21) s'étend parallèlement à la première paroi (11) et/ou parallèlement à la deuxième paroi (13) et/ou perpendiculairement aux fonds de séparation (7, 19).

9. Dispositif de ventilation du carter selon une des revendications 6 ou 8, **caractérisé en ce que**
- sur le deuxième fond de séparation (19) une déviation d'écoulement d'environ 90° a lieu, et/ou
- sur la troisième paroi (21) une déviation d'écoulement d'environ 90° a lieu.

10. Dispositif de ventilation de carter selon une des revendications 6 à 9, **caractérisé en ce que**
- le premier espace (8) forme un canal d'admission relié à l'admission (3), alors que le troisième espace (20) forme un canal d'échappement relié à l'échappement (4),
- le deuxième espace (9) forme un espace intermédiaire disposé entre le canal d'admission et le canal d'échappement,
- dans lequel il peut notamment être prévu que deux ou plus espaces intermédiaires de ce type peuvent être prévus.

11. Dispositif de ventilation du carter selon une des revendications 1 à 10, caractérisé un élément de filtre (27) est disposé dans la bordure (23).

12. Dispositif de ventilation du carter selon une des revendications 1 à 11, **caractérisé en ce que** au moins un autre fond (7, 19) et/ou au moins une telle paroi (13, 21) présente une structure collectrice (25) supplémentaire pour collecter les impuretés (6) séparées de l'écoulement de gaz (5).

13. Dispositif de ventilation du carter selon une des revendications 1 à 12, **caractérisé en ce que** au moins une telle paroi (13, 21) présente une structure collectrice (25) pour collecter et transférer au fond suivant (19, 22) les impuretés (6) séparées de l'écoulement de gaz (5).

14. Dispositif de ventilation du carter selon les revendications 12 ou 13, **caractérisé en ce que**
- la structure collectrice respective (25) présente une structure de fibres (26), comme par exemple un voile non tissé de fibres ou un tissu de fibres, ou une structure spongieuse ou une structure mousseuse, et/ou
- la structure collectrice respective (25) présente au moins une protubérance en saillie du fond respectif (7, 19) ou de la paroi respective (13, 21), qui s'étend transversalement à l'écoulement de gaz (5).

15. Dispositif de ventilation du carter selon une des revendications 1 à 14, **caractérisé en ce que** au moins une structure de filtre (17) et/ou une structure de tamis (15) et/ou une structure à charbon actif est disposée en aval d'au moins une buse d'écoulement (12) dans l'espace respectif (9, 20).
